# FASCICULE DE BREVET EUROPEEN

(11) **EP 0 914 766 B1**
(45) Date de publication et mention de la délivrance du brevet: **28.08.2002**
(21) Numéro de dépôt: 98440246.1
(22) Date de dépôt: 02.11.1998
(51) Int. Cl.: A01D 78/10

(54) **Machine de fenaison**
Heuwerbungsmachine
Haymaking machine

(30) Priorité: 04.11.1997 FR 9714002
(43) Date de publication de la demande: 12.05.1999
(73) Titulaire: KUHN S.A., 67700 Saverne (FR)
(72) Inventeur: Aron, Jérôme, 67330 Dossenheim sur Zinsel (FR)
(74) Mandataire: Andres, Jean-Claude

(56) Documents cités:
- EP-A- 0 614 604
- DE-A- 4 122 072
- DE-U- 9 211 824
- DE-U- 9 320 479
- FR-A- 2 707 450

## Description

La présente invention se rapporte à une machine de fenaison comportant une structure porteuse pouvant être reliée à un tracteur, laquelle structure porte au moins un rotor avec des outils de travail, lequel rotor est monté tournant sur un axe de rotation qui est dirigé vers le bas et qui porte à son extrémité inférieure une ou plusieurs paires de roues, chaque paire étant fixée sur une poutrelle qui peut bouger par rapport audit axe de rotation.

Sur une machine de ce genre, les roues suivent les dénivellations du sol au moins durant le travail. L'ampleur des déplacements qu'elles effectuent en passant ces dénivellations n'est cependant pas intégralement transmise au rotor. Celui-ci est alors plus stable et ses outils de travail restent plus proche de sol.

Toutefois, lorsque le tracteur passe lui-même sur des dénivellations, il soulève ou abaisse l'avant de la machine. Les outils des rotors sont alors soit éloignés du sol soit poussés dans celui-ci. Dans le premier cas, les outils n'arrivent pas à saisir la totalité du fourrage qui se trouve au sol, ce qui peut occasionner des pertes. Lorsque les outils sont poussés dans le sol, ils peuvent souiller le fourrage avec de la terre et endommager le tapis végétal.

La présente invention a pour but de remédier à ces inconvénients. Elle doit notamment permettre aux outils du rotor de bien suivre les dénivellations du sol. Elle doit aussi permettre de régler facilement la trajectoire des outils de travail par rapport au sol.

A cet effet, une importante caractéristique de l'invention consiste en ce que la poutrelle de chaque paire de roues est reliée à l'axe de rotation du rotor correspondant par des moyens permettant à ce rotor de pivoter par rapport à ladite poutrelle et à ses roues autour d'un centre instantané de rotation se situant dans la zone la plus proche du sol de la trajectoire des outils de travail.

Cet agencement fait que dans la zone de travail les outils de chaque rotor pivotent autour d'un centre instantané de rotation qui se situe près de leurs extrémités extérieures, lorsque l'avant de la machine est soulevé ou abaissé par le tracteur. La distance entre lesdites extrémités et le sol reste alors pratiquement constante. Cela évite les pertes de fourrage et les souillures évoquées.

De même, lorsque l'utilisateur veut modifier l'angle que forme avec le sol la trajectoire suivie par les outils de travail, il lui suffit de changer l'inclinaison de l'axe de rotation du ou des rotors en agissant par exemple sur les moyens qui lient la machine au tracteur. Le ou les rotors pivotent alors autour du centre instantané de rotation. De ce fait, les outils restent à la bonne distance du sol dans la zone de travail et ne nécessitent aucun réglage supplémentaire.

Les moyens reliant la poutrelle de chaque paire de roues à l'axe de rotation du rotor correspondant peuvent être constitués par deux bielles qui sont articulées par rapport à la poutrelle et à l'axe de rotation du rotor correspondant avec des axes dirigés transversalement à la direction d'avancement et étant sensiblement parallèles entre eux. Les deux bielles sont dirigées vers le bas et vers l'avant à partir de l'axe de rotation du rotor correspondant de telle sorte que les prolongements des droites passant par leurs axes d'articulation respectifs se croisent en un point qui se situe dans la zone la plus proche du sol de la trajectoire des outils de travail et par lequel passe le centre instantané de rotation.

Les moyens reliant la poutrelle de chaque paire de roues à l'axe de rotation du rotor correspondant peuvent également être constitués par une bielle qui est articulée au moyen d'axes sur la poutrelle et sur un support solidaire dudit axe de rotation et par un ressort à lames qui est lié rigidement à ladite poutrelle et est monté glissant dans un guide solidaire dudit support. La bielle et le ressort à lames sont dirigés vers le bas et vers l'avant à partir de l'axe de rotation du rotor de telle sorte que le prolongement d'une droite passant par les axes d'articulation de la bielle et le prolongement de l'axe de symétrie du ressort à lames se croisent en un point qui se situe dans la zone la plus proche du sol de la trajectoire des outils de travail et par lequel passe le centre instantané de rotation.

D'autres caractéristiques et avantages de l'invention ressortiront de la description ci-après de plusieurs exemples de réalisation non limitatifs de l'invention, avec référence aux dessins annexés dans lesquels :
- la figure 1 représente une vue de dessus d'un premier exemple de réalisation d'une machine selon l'invention,
- la figure 2 représente une vue de côté de cette machine,
- la figure 3 représente une vue de côté d'un deuxième exemple de réalisation,
- la figure 4 représente une vue de côté d'un troisième exemple de réalisation.

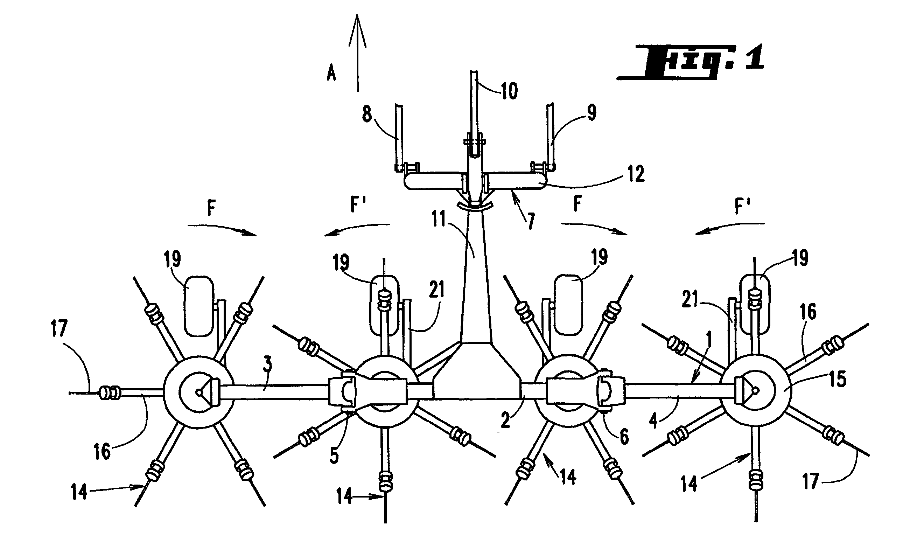

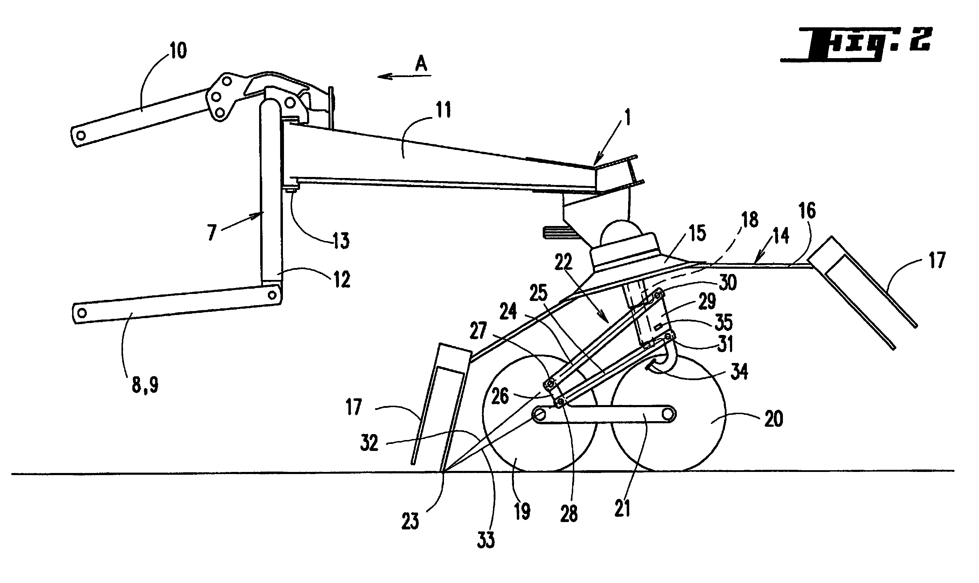

Telle qu'elle est représentée sur les figures 1 et 2, la machine selon l'invention comporte une structure (1) de forme allongée. Celle-ci se compose d'une section centrale (2) et de deux sections latérales (3 et 4) qui sont articulées aux extrémités de ladite section centrale (2) au moyen de pivots (5 et 6). La section centrale (2) est munie d'un dispositif (7) pour l'accrochage aux barres d'attelage (8, 9 et 10) d'un tracteur. Celui-ci sert à animer et à déplacer la machine dans la direction d'avancement indiquée par la flèche (A). Le dispositif d'accrochage (7) se compose d'une poutre (11) et d'une potence d'accouplement (12) du type trois points. Cette poutre (11) est fixée sur la section centrale (2) et s'étend dans la direction d'avancement (A). La potence (12) peut être articulée à l'extrémité avant de la poutre (11) au moyen d'un axe sensiblement vertical (13).

Le dispositif d'accrochage (7) pourrait également être constitué par un timon dans le cas d'une machine dite traînée.

La section centrale (2) de la structure (1) porte deux rotors de fanage (14), tandis que chaque section latérale (3, 4) porte un seul rotor de fanage (14). La machine représentée possède ainsi un total de quatre rotors (14). On comprendra que le nombre de rotors (14) et de sections (2 à 4) peut varier en fonction de la largeur de travail que doit avoir la machine.

Chaque rotor (14) possède un moyeu (15) sur lequel sont fixés des bras (16) à l'aide de boulons. Ces bras (16) s'étendent radialement et portent des outils de travail (17) en forme de fourches. Ledit moyeu (15) est monté de manière à pouvoir tourner sur un axe de rotation (18) qui est lié à la section (2, 3 ou 4) portant le rotor (14) correspondant, et qui est dirigé vers le bas à partir de cette section (2, 3 ou 4). Les axes de rotation (18) des différents rotors (14) peuvent être sensiblement verticaux ou légèrement inclinés dans la direction d'avancement (A).

Les rotors (14) peuvent être entraînés en rotation autour des axes (18), dans le sens des flèches (F et F'), au moyen d'arbres de transmission logés dans les sections (2, 3 et 4) de la structure (1). A cet effet, chaque moyeu (15) possède une couronne dentée qui engrène avec un pignon solidaire de l'arbre de transmission qui est logé dans la section correspondante (2, 3 ou 4) de la structure (1). Lesdits arbres de transmission sont reliés entre-eux par des cardans ou des articulations à doigts situés au niveau des pivots (5 et 6) entre la section centrale (2) et les sections latérales (3 et 4). Ces arbres sont eux-mêmes entraînés en rotation depuis l'arbre de prise de force du tracteur au moyen d'un arbre de transmission intermédiaire.

Les axes de rotation (18) des rotors (14) sont munis à leurs extrémités inférieures d'une paire de roues (19 et 20). Chaque paire de roues (19 et 20) est montée sur une poutrelle (21) qui est dirigée dans la direction d'avancement (A) et qui peut bouger par rapport à l'axe de rotation (18) correspondant. La liaison entre chaque poutrelle (21) et l'axe de rotation (18) du rotor (14) correspondant est réalisée par des moyens (22) qui permettent audit rotor (14) de pivoter par rapport à ladite poutrelle (21) et à ses roues (19 et 20) autour d'un centre instantané de rotation (23) se situant dans la zone la plus proche du sol de la trajectoire des outils de travail (17).

Tel que cela ressort de la figure 2, les moyens de liaison (22) sont constitués par deux bielles (24 et 25) qui sont articulées, d'une part, sur un bras (26) de la poutrelle (21) avec des axes (27 et 28) et, d'autre part, sur un support (29) solidaire de l'axe de rotation (18) avec des axes (30 et 31). Lesdits axes d'articulation (27, 28, 30 et 31) s'étendent transversalement à la direction (A) et sont sensiblement parallèles entre-eux. Les bielles (24 et 25) sont disposées l'une au-dessus de l'autre. A partir du support (29), elles sont dirigées vers le bas et vers l'avant de telle sorte que les prolongements de droites (32 et 33) passant par leurs axes d'articulation respectifs (27 et 30, 28 et 31) se croisent en un point qui se situe dans la zone la plus proche du sol de la trajectoire des outils de travail (17) et par lequel passe le centre instantané de rotation (23).

Le support (29) comporte une première butée (34) qui se situe à une certaine distance en-dessous de la bielle (25). Cette butée (34) limite le déplacement des bielles (24 et 25), de la poutrelle (21) et des roues (19 et 20) vers le bas. Ledit support (29) comporte une seconde butée (35) qui se situe à une certaine distance au-dessus de la bielle (25). La seconde butée (35) limite le déplacement des bielles (24 et 25) vers le haut et empêche ainsi la roue (19) la plus en avant d'entrer dans la trajectoire des bras porte-outils (16).

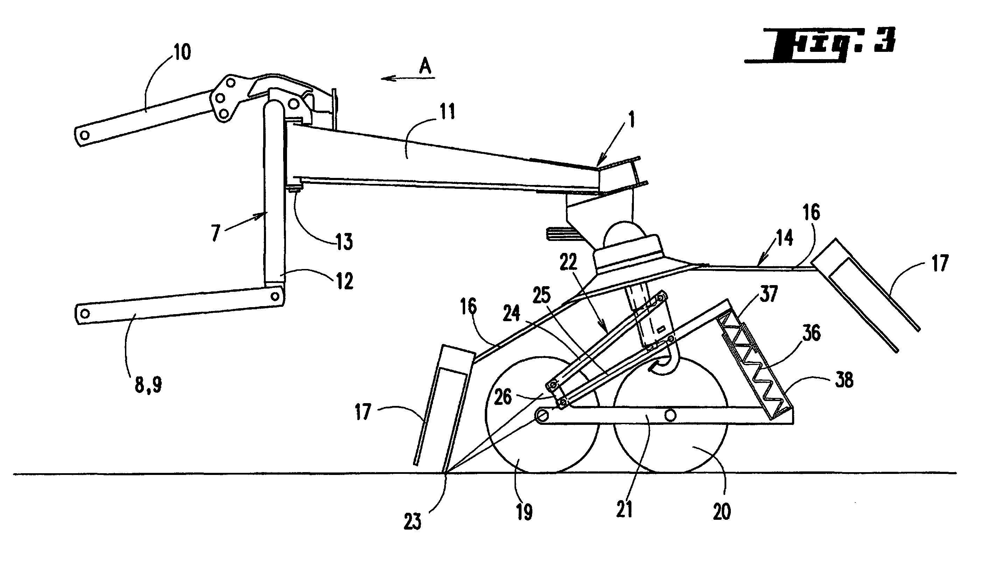

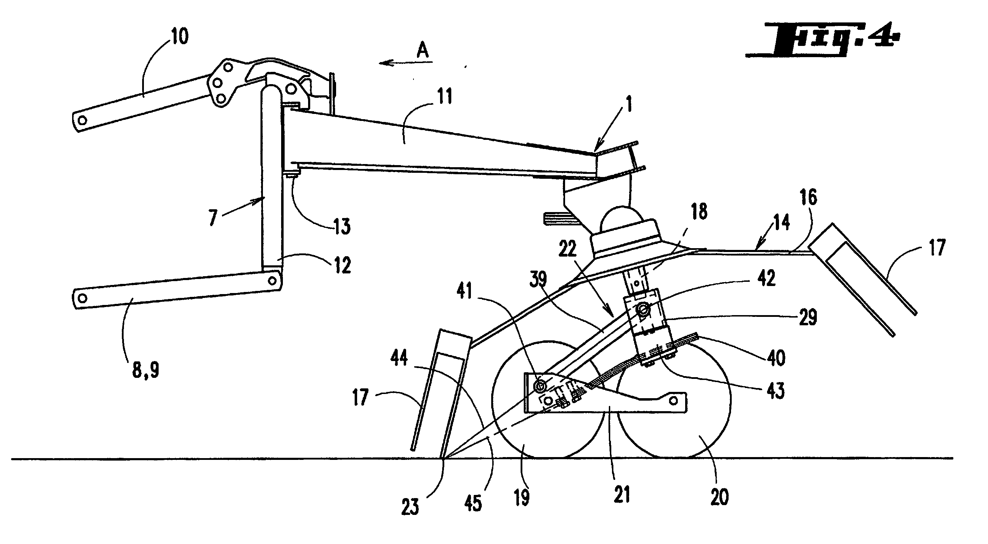

Les exemples de réalisation représentés sur les figures 3 et 4 se rapportent à des machines similaires à celle représentée sur les figures 1 et 2 et décrites ci-dessus. De ce fait, seuls les dispositifs qui diffèrent seront décrits en détail ci-après.

Dans l'exemple selon la figure 3, les moyens (22) permettant à chaque rotor (14) de pivoter autour du centre instantané de rotation (23) comportent en sus un ressort d'allégement (36). Ce dernier est un ressort de compression disposé entre la poutrelle (21) et la bielle inférieure (25). Cette bielle (25) et la poutrelle (21) comportent avantageusement des prolongements vers l'arrière pour faciliter l'implantation du ressort (36). Il pousse en sus la poutrelle (21) et les roues (19 et 20) vers le bas et assure ainsi la stabilisation de ces dernières. Le ressort (36) peut être logé dans deux tubes de protection (37 et 38) coulissant l'un dans l'autre. Le tube (38) est solidaire de la poutrelle (21) tandis que l'autre tube (37) est solidaire de la bielle (25). Ces tubes (37 et 38) empêchent notamment l'arrivée d'herbe ou d'autres corps étrangers jusqu'au ressort (36).

Dans l'exemple de réalisation selon la figure 4, les moyens (22) permettant à chaque rotor (14) de pivoter autour du centre instantané de rotation (23) sont constitués par une bielle (39) et un ressort à lames (40). La bielle (39) est articulée sur la poutrelle (21) avec un axe (41) transversal à la direction d'avancement (A) et sur le support (29) avec un axe (42) sensiblement parallèle audit axe (41). Le ressort à lames (40) est lié rigidement à la poutrelle (21) et est monté glissant dans un guide (43) qui est solidaire du support (29).

La bielle (39) et le ressort à lames (40) sont dirigés vers le bas et vers l'avant à partir du support (29) monté sur l'axe de rotation (18), de telle sorte que le prolongement d'une droite (44) passant par les axes d'articulation (41 et 42) de la bielle (39) et le prolongement de l'axe de symétrie (45) du ressort à lames (40) se croisent en un point qui se situe dans la zone la plus proche du sol de la trajectoire des outils de travail (17) et par lequel passe le centre instantané de rotation (23).

Les exemples de réalisation des moyens (22) décrits ci-dessus peuvent également être utilisés sur des machines qui ne comportent qu'un seul rotor. Dans ces cas il est préférable d'utiliser deux poutrelles (21) ayant chacune deux roues (19 et 20). Ces deux poutrelles (21) sont placées côte à côte et chacune est reliée par ses propres moyens (22) au support (29) qui est monté sur l'axe de rotation (18).

Durant le travail, la machine selon l'exemple représenté sur les figures 1 et 2 est accouplée à un tracteur et est déplacée à l'aide de celui-ci dans la direction d'avancement (A). Les rotors (14) sont alors sensiblement alignés et sont entrainés en rotation autour de leurs axes (18) respectifs, de telle sorte qu'ils tournent deux à deux en convergence à l'avant (flèches F et F'). Lors de cette rotation, leurs outils (17) ramassent, sur la moitié avant de leur trajectoire, les végétaux qui se trouvent sur le sol, les déplacent vers l'arrière et les étalent à nouveau tout en provoquant leur retournement.

Dans la position de travail, les roues (19 et 20) de la machine se déplacent sur le sol. Lorsque le tracteur passe sur un obstacle il soulève ou abaisse l'avant de la structure (1). Les rotors (14) pivotent alors par rapport aux poutrelles (21) et aux roues (19 et 20) autour de leur centre instantané de rotation (23). Ce pivotement s'effectue par l'intermédiaire des bielles (24 et 25) qui pivotent elles-mêmes autour de leurs axes d'articulation (27, 28, 30 et 31). Les extrémités extérieures des outils (17) restent alors constamment à une faible distance au-dessus du sol. On évite ainsi que, selon le cas, lesdites extrémités piquent dans le sol ou bien laissent une couche de fourrage non travaillé en passant par-dessus celui-ci.

Lorsque les roues (19 et 20) des rotors (14) passent elles-mêmes sur des dénivellations, elles font également pivoter les rotors (14) autour de leur centre instantané de rotation (23) par l'intermédiaire des bielles (24 et 25). En sus, grâce à leur montage en tandem, elles ne transmettent pas intégralement la hauteur des dénivellations aux rotors (14). Ceci permet d'obtenir un déplacement plus régulier de la machine.

Les déplacements relatifs entre les rotors (14) et les roues (19 et 20) sont limités par les butées (34 et 35). Celles-ci empêchent les bielles (24 et 25) de sortir d'un secteur prédéfini. Les butées (35) évitent notamment que les bielles (24 et 25) se déplacent vers le haut jusque dans une zone où les roues (19) les plus en avant pourraient entrer en collision avec les bras porte-outils (16).

Pour modifier l'inclinaison des axes de rotation (18) des rotors (14) l'utilisateur peut modifier la longueur de la barre d'attelage supérieure (10) du tracteur. La structure (1) de la machine et les rotors (14) pivotent alors autour du centre instantané de rotation (23) jusqu'à ce que les axes de rotation (18) soient correctement positionnés. Aucun réglage en hauteur n'est nécessaire pour conserver la bonne distance entre les extrémités des outils (17) et le sol.

La machine conforme à l'exemple de réalisation selon la figure 3 travaille de la même manière que la machine précitée. Durant l'utilisation, les ressorts (36) allègent les rotors (14), ce qui favorise l'adaptation aux dénivellations du sol. En sus, ils maintiennent les roues (19 et 20) au sol et stabilisent ainsi l'ensemble, notamment sur les terrains très dénivelés.

Sur la machine selon la figure 4, le pivotement des rotors (14) autour de leur centre instantané de rotation (23) s'effectue par l'intermédiaire des bielles (39) et des ressorts à lames (40) correspondants. Lesdites bielles (39) pivotent alors autour de leurs axes d'articulation (41 et 42). Les ressorts à lames (40) se déforment pour permettre aux rotors (14) de tourner autour de leurs centres instantanés de rotation (23) respectifs. Par ailleurs, ces ressorts (40) allègent les rotors (14) et maintiennent les roues (19 et 20) en contact avec le sol en vue d'une meilleure stabilité.

Pour le transport, les sections latérales (3 et 4) de la structure porteuse (1) peuvent être relevées dans des positions pratiquement verticales afin de réduire la largeur de la machine. Ensuite, toute la machine peut être soulevée au moyen des bielles de relevage (8, 9 et 10) et peut être portée par le tracteur.

Il est bien évident que l'invention n'est pas limitée aux modes de réalisation décrits et représentés sur les dessins annexés. Des modifications sont possibles, notamment en ce qui concerne la constitution des divers éléments ou par substitution d'équivalents techniques, sans pour autant sortir du domaine de protection tel que défini dans les revendications.

## Revendications

1. Machine de fenaison comportant une structure (1) porteuse pouvant être reliée à un tracteur, laquelle structure (1) porte au moins un rotor (14) avec des outils de travail (17), lequel rotor (14) est monté tournant sur un axe de rotation (18) qui est dirigé vers le bas et qui porte à son extrémité inférieure une ou plusieurs paires de roues (19, 20), chaque paire étant montée sur une poutrelle (21) qui peut bouger par rapport audit axe de rotation (18), ***caractérisée par le fait que*** la poutrelle (21) de chaque paire de roues (19, 20) est reliée à l'axe de rotation (18) du rotor (14) correspondant par des moyens (22) permettant à ce rotor (14) de pivoter par rapport à ladite poutrelle (21) et à ses roues (19 et 20) autour d'un centre instantané de rotation (23) se situant dans la zone la plus proche du sol de la trajectoire des outils de travail (17).

2. Machine selon la revendication 1, ***caractérisée par le fait que*** la poutrelle (21) de chaque paire de roues (19, 20) est reliée à un support (29) monté sur l'axe de rotation (18) du rotor (14) correspondant au moyen de deux bielles (24 et 25) qui sont articulées par rapport à la poutrelle (21) avec des axes (27 et 28) et par rapport à l'axe de rotation (18) du rotor (14) avec des axes (30 et 31).

3. Machine selon la revendication 2, ***caractérisée par le fait que*** les axes d'articulation (27, 28, 30 et 31) des bielles (24 et 25) s'étendent transversalement à la direction d'avancement (A) et sont sensiblement parallèles entre eux.

4. Machine selon la revendication 2 ou 3, ***caractérisée par le fait que*** les bielles (24 et 25) sont dirigées vers le bas et vers l'avant à partir de l'axe de rotation (18) du rotor (14) correspondant de telle sorte que les prolongements de droites (32 et 33) passant par leurs axes d'articulation (27, 30 et 28, 31) respectifs se croisent en un point qui se situe dans la zone la plus proche du sol de la trajectoire des outils de travail (17) et par lequel passe le centre instantané de rotation (23).

5. Machine selon l'une quelconque des revendications précédentes, ***caractérisée par le fait qu***'elle comporte une première butée (34) en vue de limiter le déplacement des bielles (24 et 25) vers le bas.

6. Machine selon l'une quelconque des revendications précédentes, ***caractérisée par le fait qu***'elle comporte une seconde butée (35) en vue de limiter les déplacements des bielles (24 et 25) vers le haut.

7. Machine selon l'une quelconque des revendications précédentes, ***caractérisée par le fait qu***'elle comporte sous chaque rotor (14) un ressort (36) d'allégement et de stabilisation.

8. Machine selon la revendication 7, ***caractérisée par le fait que*** le ressort (36) est un ressort de compression disposé entre la poutrelle (21) et la bielle inférieure (25).

9. Machine selon la revendication 7 ou 8, ***caractérisée par le fait que*** le ressort (36) est logé dans deux tubes de protection (37 et 38) coulissant l'un dans l'autre.

10. Machine selon la revendication 1, ***caractérisée par le fait que*** la poutrelle (21) de chaque paire de roues (19 et 20) est reliée à un support (29) monté sur l'axe de rotation (18) du rotor (14) correspondant au moyen d'une bielle (39) et d'un ressort à lames (40).

11. Machine selon la revendication 10, ***caractérisée par le fait que*** la bielle (39) est articulée sur la poutrelle (21) et sur le support (29) au moyen d'axes (41 et 42) qui s'étendent transversalement à la direction d'avancement (A) et qui sont sensiblement parallèles entre eux.

12. Machine selon la revendication 10, ***caractérisée par le fait que*** le ressort à lames (40) est lié rigidement à la poutrelle (21) et est monté glissant dans un guide (43) solidaire du support (29).

13. Machine selon l'une quelconque des revendications 10 à 12, ***caractérisée par le fait que*** la bielle (39) et le ressort à lames (40) sont dirigés vers le bas et vers l'avant en partant de l'axe de rotation (18) correspondant de telle sorte que le prolongement d'une droite (44) qui passe par les axes d'articulation (41 et 42) de la bielle (39) et le prolongement de l'axe de symétrie (45) du ressort à lames (40) se croisent en un point qui se situe dans la zone la plus proche du sol de la trajectoire des outils de travail (17) et par lequel passe le centre instantané de rotation (23).

## Patentansprüche

1. Heuwerbungsmaschine mit einem Traggestell (1), das mit einem Schlepper verbunden werden kann, wobei das Gestell (1) mindestens einen Rotor (14) mit Arbeitswerkzeugen (17) trägt und der Rotor (14) an einer Drehachse (18) drehbar angebracht ist, welche nach unten gerichtet ist und an ihrem unteren Ende ein oder mehrere Paare Räder (19, 20) trägt, wobei jedes Paar an einem Träger (21) angebracht ist, der sich bezüglich der Drehachse (18) bewegen kann, ***dadurch gekennzeichnet,* daß** der Träger (21) für jedes Paar Räder (19, 20) durch Mittel (22), die ein Schwenken dieses Rotors (14) bezüglich des Trägers (21) und seiner Räder (19 und 20) um einen Momentanpol (23), der sich in dem am nächsten zum Boden der Bahn der Arbeitswerkzeuge (17) befindlichen Bereich befindet, gestatten, mit der Drehachse (18) des entsprechenden Rotors (14) verbunden ist.

2. Maschine nach Anspruch 1, ***dadurch gekennzeichnet*, daß** der Träger (21) für jedes Paar Räder (19, 20) mittels zweier Verbindungsstangen (24 und 25), die mit Achsen (27 und 28) bezüglich des Trägers (21) und mit Achsen (30 und 31) bezüglich der Drehachse (18) des Rotors (14) angelenkt sind, mit einer an der Drehachse (18) des entsprechenden Rotors (14) angebrachten Stütze (29) verbunden ist.

3. Maschine nach Anspruch 2, ***dadurch gekennzeichnet,* daß** sich die Gelenkachsen (27, 28, 30 und 31) der Verbindungsstangen (24 und 25) quer zur Fahrtrichtung (A) erstrecken und im wesentlichen parallel zueinander sind.

4. Maschine nach Anspruch 2 oder 3, ***dadurch gekennzeichnet*, daß** die Verbindungsstangen (24 und 25) von der Drehachse (18) des entsprechenden Rotors (14) ausgehend so nach unten und nach vorne gerichtet sind, daß sich die Verlängerungen von durch ihre jeweiligen Gelenkachsen (27, 30 und 28, 31) verlaufenden Geraden (32 und 33) in einem Punkt schneiden, der sich in dem am nächsten zum Boden der Bahn der Arbeitswerkzeuge (17) befindlichen Bereich befindet und durch den der Momentanpol (23) verläuft.

5. Maschine nach irgend einem der vorhergehenden Ansprüche, ***dadurch gekennzeichnet,* daß** sie einen ersten Anschlag (34) zur Begrenzung der Abwärtsbewegung der Verbindungsstangen (24 und 25) aufweist.

6. Maschine nach irgend einem der vorhergehenden Ansprüche, ***dadurch gekennzeichnet,* daß** sie einen zweiten Anschlag (35) zur Begrenzung der Aufwärtsbewegungen der Verbindungsstangen (24 und 25) aufweist.

7. Maschine nach irgend einem der vorhergehenden Ansprüche, ***dadurch gekennzeichnet,* daß** sie unter jedem Rotor (14) eine Entlastungs- und Stabilisierfeder (36) aufweist.

8. Maschine nach Anspruch 7, ***dadurch gekennzeichnet,* daß** die Feder (36) eine zwischen dem Träger (21) und der unteren Verbindungsstange (25) angeordnete Druckfeder ist.

9. Maschine nach Anspruch 7 oder 8, ***dadurch gekennzeichnet,* daß** die Feder (36) in zwei ineinander gleitbaren Schutzröhren (37 und 38) untergebracht ist.

10. Maschine nach Anspruch 1, ***dadurch gekennzeichnet,* daß** der Träger (21) für jedes Paar Räder (19 und 20) mittels einer Verbindungsstange (39) und einer Blattfeder (40) mit einer an der Drehachse (18) des entsprechenden Rotors (14) angebrachten Stütze (29) verbunden ist.

11. Maschine nach Anspruch 10, ***dadurch gekennzeichnet,* daß** die Verbindungsstange (39) mittels sich quer zur Fahrtrichtung (A) erstreckender und im wesentlichen parallel zueinander verlaufender Achsen (41 und 42) an dem Träger (21) und an der Stütze (29) angelenkt ist.

12. Maschine nach Anspruch 10, ***dadurch gekennzeichnet,* daß** die Blattfeder (40) mit dem Träger (21) starr verbunden und in einer fest mit der Stütze (29) verbundenen Führung (43) gleitbar angebracht ist.

13. Maschine nach irgend einem der Ansprüche 10 bis 12, ***dadurch gekennzeichnet,* daß** die Verbindungsstange (39) und die Blattfeder (40) von der entsprechenden Drehachse (18) ausgehend so nach unten und nach vorne ausgerichtet sind, daß die Verlängerung einer durch die Gelenkachsen (41 und 42) der Verbindungsstange (39) verlaufenden Geraden (44) und die Verlängerung der Symmetrieachse (45) der Blattfeder (40) sich in einem Punkt schneiden, der sich in dem am nächsten zum Boden der Bahn der Arbeitswerkzeuge (17) befindlichen Bereich befindet und durch den der Momentanpol (23) verläuft.

## Claims

1. Haymaking machine comprising a bearing structure (1) which can be connected to a tractor, which structure (1) bears at least one rotor (14) with working tools (17), which rotor (14) is mounted so that it can rotate on an axis of rotation (18) which is directed downwards and which at its lower end bears one or several pairs of wheels (19, 20), each pair being mounted on a girder (21) which can move with respect to the said axis of rotation (18), ***characterized in* that** the girder (21) of each pair of wheels (19, 20) is connected to the axis of rotation (18) of the corresponding rotor (14) by means (22) allowing this rotor (14) to pivot with respect to the said girder (21) and to its wheels (19 and 20) about an instantaneous centre of rotation (23) situated in the region of the path of the working tools (17) which is closest to the ground.

2. Machine according to Claim 1, ***characterized in* that** the girder (21) of each pair of wheels (19, 20) is connected to a support (29) mounted on the axis of rotation (18) of the corresponding rotor (14) by means of two connecting rods (24 and 25) which are articulated with respect to the girder (21) with axes (27 and 28) and with respect to the axis of rotation (18) of the rotor (14) with axes (30 and 31).

3. Machine according to Claim 2, ***characterized in* that** the axes of articulation (27, 28, 30 and 31) of the connecting rods (24 and 25) run transversely to the direction of forward travel (A) and are substantially mutually parallel.

4. Machine according to Claim 2 or 3, ***characterized in* that** the connecting rods (24 and 25) are directed downwards and forwards from the axis of rotation (18) of the corresponding rotor (14) in such a way that the continuations of the straight lines (32 and 33) passing through their respective axes of articulation (27, 30 and 28, 31) intersect at a point lying in the region of the path of the working tools (17) that is closest to the ground and through which the instantaneous centre of rotation (23) passes.

5. Machine according to any one of the preceding claims, ***characterized in* that** it comprises a first stop (34) for limiting the downwards movement of the connecting rods (24 and 25).

6. Machine according to any one of the preceding claims, ***characterized in* that** it comprises a second stop (35) for limiting the upwards movements of the connecting rods (24 and 25).

7. Machine according to any one of the preceding claims, ***characterized in* that** it comprises, under each rotor (14) a lightening and stabilizing spring (36).

8. Machine according to Claim 7, ***characterized in* that** the spring (36) is a compression spring arranged between the girder (21) and the lower connecting rod (25).

9. Machine according to Claim 7 or 8, ***characterized in* that** the spring (36) is housed in two protective tubes (37 and 38) sliding one inside the other.

10. Machine according to Claim 1, ***characterized in* that** the girder (21) of each pair of wheels (19 and 20) is connected to a support (29) mounted on the axis of rotation (18) of the corresponding rotor (14) by means of a connecting rod (39) and of a leaf spring (40).

11. Machine according to Claim 10, ***characterized in* that** the connecting rod (39) is articulated to the girder (21) and to the support (29) by means of axes (41 and 42) which run transversely to the direction of forward travel (A) and which are substantially mutually parallel.

12. Machine according to Claim 10, ***characterized in* that** the leaf spring (40) is connected rigidly to the girder (21) and is mounted so as to slide in a guide (43) secured to the support (29).

13. Machine according to any one of Claims 10 to 12, ***characterized in* that** the connecting rod (39) and the leaf spring (40) are directed downwards and forwards from the corresponding axis of rotation (18) in such a way that the continuation of a straight line (44) which passes through the axes of articulation (41 and 42) of the connecting rod (39) and the continuation of the axis of symmetry (45) of the leaf spring (40) intersect at a point which lies in the region of the path of the working tools (17) which is closest to the ground and through which the instantaneous centre of rotation (23) passes.
